# EUROPÄISCHE PATENTSCHRIFT

(11) **EP 0 701 853 B1**
(45) Veröffentlichungstag und Bekanntmachung des Hinweises auf die Patenterteilung: **14.04.1999**
(21) Anmeldenummer: 95111369.5
(22) Anmeldetag: 20.07.1995
(51) Int. Cl.: B01D 46/30

(54) **Verfahren und Vorrichtung zur Nassabreinigung von mit unlöslichen Partikeln beladenen Schuttschichtfiltern**
Process and device for wet cleaning of filter beds loaded with unsoluble particles
Procédé et dispositif pour nettoyer par voie humide des couches filtrantes chargées de particules insolubles

(30) Priorität: 16.09.1994 DE 4432995
(43) Veröffentlichungstag der Anmeldung: 20.03.1996
(73) Patentinhaber: Forschungszentrum Karlsruhe GmbH, 76133 Karlsruhe (DE)
(72) Erfinder: Lindner, Wolfgang, D-76297 Stutensee (DE); Tyminski, Bogdan, Dr., PL-02-507 Warszawa (PL); Chmielewski, Andrzej, Prof. Dr., PL-02-758 Warszawa (PL)
(74) Vertreter: Rückert, Friedrich, Dr.

(56) Entgegenhaltungen:
- EP-A- 0 529 315
- CH-A- 394 126
- DE-C- 230 585

## Beschreibung

Die vorliegende Erfindung betrifft ein Verfahren zur Naßabreinigung von mit unlöslichen Partikeln beladenen Schüttschichtfiltern aus mehreren Schichten schüttbaren Filtermateriales auf siebartigen Böden, welche von oben nach unten von dem zu reinigenden Abgasstrom durchsetzt werden, bei welchem die Waschflüssigkeit in Kontakt mit dem Filtermaterial gebracht wird, die Schichten vollständig mit der Waschflüssigkeit geflutet werden und gleichzeitig mit der Flutung am Boden der Schichten in die Schüttung ein Gas wie z. B. Luft eingeblasen wird

Das Verfahren befasst sich allgemein mit der Abscheidung von Partikeln aus Abluft- oder Abgasströmen, insbesondere mit dem kontinuierlichen Betrieb von Schüttschichtfiltern bei der Abscheidung von in Flüssigkeiten unlöslichen Partikeln. Dabei ist die Abreinigung Voraussetzng für einen kontinuierlichen Betrieb, d. h. die Trennung der abgeschiedenen Stoffe vom filternden Material. Dieses Material besteht gewöhnlich aus einem Granulat verschiedener Körnung und Materialzusammensetzung.

Aus der DE-C-41 27 746 ist ein Verfahren von mit löslichen Partikeln beladenen Schüttschichtfiltern aus einer oder mehreren Schichten schüttbaren Filtermateriales auf siebartigen Böden bekannt, bei welchem eine Waschflüssigkeit auf das Filtermaterial aufgesprüht wird. Dadurch werden die löslichen Partikel in der Schüttung aufgelöst und können mitsamt der Flüssigkeit abgezogen werden. Bei der Abscheidung unlöslicher Partikel ist diese Methode jedoch nicht anwendbar, die abgeschiedenen Stoffe, vor allem Stäube, können nicht abgereinigt werden. Die Folge davon ist eine unzulässige Differenzdruckerhöhung bzw. Verstopfung des Filters. Die beschriebene Nassabreinigung ist somit nur bei löslichen Partikeln anwendbar. In vielen Fällen ist jedoch ein Mischaerosol mit hohen unlöslichen Anteilen abzuscheiden und abzureinigen.

Aus der DE-C-230 585 ist ein Verfahren bekannt bei welchem die Waschflüssigkeit in Kontakt mit dem Filtermaterial gebracht wird, die Schichten vollständig mit der Waschflüssigkeit geflutet werden und gleichzeitig mit der Flutung am Boden der Schichten in die Schüttung ein Gas wie z. B. Luft eingeblasen wird

Die vorliegende Erfindung hat nun zur Aufgabe, ein Verfahren anzugeben, das die Nassabreinigung in mehreren Filterschichten abgeschiedener, in Flüssigkeiten unlöslicher Partikel ermöglicht und bei welchem die Abgasreinigung kontinuierlich erfolgen kann.

Zur Lösung der Aufgabe schlägt die Erfindung bei einem Verfahren der eingangs beschriebenen Art vor, daß die Schichten einzeln für sich vollständig mit der Waschflüssigkeit geflutet werden und gleichzeitig am Boden jeder Schicht in die Schüttung ein Gas wie z. B. Luft eingeblasen wird und daß bei den Schichten jeweils nacheinander nur eine geflutet und durch die Lufteinblasung abgereinigt, während die übrigen weiterhin vom zu reinigenden Gasstrom durchströmt werden. Nach einem weiteren Gedanken der Erfindung werden die dadurch mit der Waschflüssigkeit von dem Schüttgut der Filterschichten abgetrennten unlöslichen Partikel am Boden der Schüttung gemeinsam mit der Waschflüssigkeit abgezogen.

Eine Vorrichtung zur Durchführung des Verfahrens mit den Merkmalen im Oberbegriff des Anspruches 4 weist erfindungsgemäß die vorteilhaften Merkmale f) bis h) sowie a) im Kennzeichen der Ansprüche 3 und 4 auf. Die vorliegende Erfindung ermöglicht damit die Abreinigung von unlöslichen Stäuben bei der Naßabreinigung von Schüttschichten in einer vorteilhaften Betriebsweise.

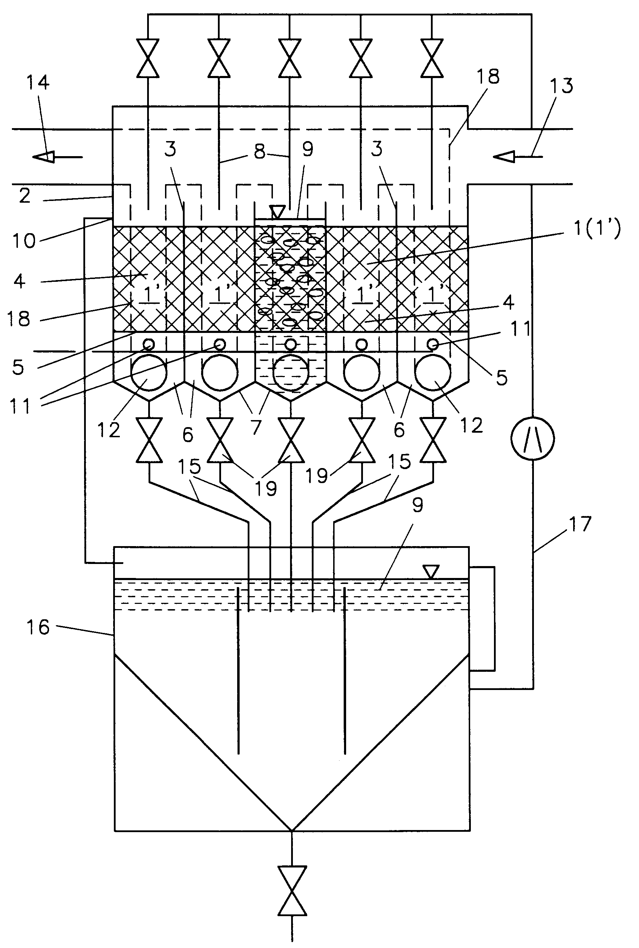

Weitere Einzelheiten der vorliegemden Erfindung werden im folgenden und anhand der Figur näher erläutert. Diese zeigt schematisch den Querschnitt durch eine Filteranlage, in welcher das neue Verfahren ausgeübt werden soll:

Die von dem zu reinigenden Gas von oben nach unten durchströmte Schüttschicht 1 ist in einem Gehäuse 2 untergebracht und in z. B. fünf Einzelschichten 1' in Kammern 4 aufgeteilt. Das Gehäuse 2 weist einen Anschluß 13 für das zu reinigende Gas bzw. die Zuluft und einen Anschluß 14 für das gereinigte Gas bzw. die Abluft auf. Beide Anschlüsse 13 und 14 liegen im oberen Teil des Gehäuses 1, die Gasführung für das zu reinigende Gas in die Einzelschichten 1' erfolgt von oben nach unten. Die einzelnen Schichten 1' sind durch Seitenwände 3 voneinander getrennt, wobei die Seitenwände 3 der Kammern 4 geringere Höhe als die Höhe des Gehäuses 2 aufweisen. Das Gehäuse 2 ist somit der Zahl der Schichten 1' entsprechend in nebeneinanderliegende Kammern 4 aufgeteilt, wobei die einzelnen Schichten 1' von oben angeströmt werden. Zwischen jeweils zwei Seitenwänden 3 einer Kammer 4 sind siebartige Böden 5 vorhanden, auf denen das von oben nach unten von dem zu reinigenden Gas durchströmte Schüttgut der Schichten 1' liegt und unter denen sich der Gassammelraum 6 für das Gas befindet, wobei der Boden des Gehäuses 1 bzw. jeder Kammer 4 als Auffangwanne 7 für die Waschflüssigkeit ausgebildet ist.

Oberhalb des Schüttgutes jeder Schicht 1'ist eine Zuleitung 8 für die Waschflüssigkeit angebracht, wodurch die einzelnen Gehäuse 4 zwischen den Seitenwänden 3 mittels der aus den Zuleitungen 8 eingebrachten Waschflüssigkeit 9 einzeln für sich oder gemeinsam bis zu einem Überlauf 10 flutbar sind, der oberhalb der Schichten 1' im oder am Gehäuse 2 angeordnet ist. In der Figur ist die mittlere Schicht 1' in geflutetem Zustand dargestellt.

Unterhalb der siebartigen Böden 5 sind in bzw. unter jeder Kammer 4 im Gassammelraum 6 Verteilerdüsen 11 angebracht, mittels welcher Luft oder ein anderes Gas in die Waschflüssigkeit 9 unter der Schicht 1' des Schüttgutes eingeblasen werden kann. Ebenfalls unterhalb der Böden 5 im Bereich des Gassamelraumes 6 befindet sich in der Wand der Gehäuse 1 bzw. der Kammern 4 jeweils für jede Schicht 1' eine Öffnung 12 für die Ableitung des gereinigten Gases zum gemeinsamen Abluftkanal 14. An die Auffangwanne 7 ist unter jeder Kammer 4 je eine absperrbare Abflußleitung 15 für die Waschflüssigkeit 9 angeschlossen, die zu einem gemeinsamen Absetzbecken 16 führt. Von dieser führt eine Rückführleitung 17 in die Zuleitung 8, mittels welcher die Waschflüssigkeit 9 rezirkuliert werden kann.

Das gereinigte Gas wird unter den Schüttungen 1' im Gassammelraum 6 gesammelt, seitlich über die Abluftöffnungen 12 abgeleitet und mittels der Kanäle 18 dem gemeinsamen Abluftkanal 14 zugeführt. Der untere Gassammelraum 6 ist als Trichter mit der Ableitung 15 und einem Abschlußventil 19 am tiefsten Punkt ausgeführt.

Die in der Schüttschicht abgeschiedenen Partikel bewirken eine Zunahme des Filterdifferenzdruckes. Bei einem vorgegeben Maximalwert wird nun das Abschlußventil 19 einer Einzelschicht 1' geschlossen und diese gleichzeitig mit der Waschflüssigkeit 9 bis zu dem Überlauf 10 gefüllt (siehe mittlere Schüttschicht 1' in der Figur). Die Flüssigkeit verschließt die jeweilige Abluftöffnung 12, so daß durch die Teilschüttung kein Abgas mehr strömen kann, der Abgasstrom verteilt sich auf die restlichen Teilschüttungen. Nun wird durch die Verteilerdüsen 11 Luft von unten in die mit Flüssigkeit 9 gefüllte Schüttung 1 geblasen. Die aufsteigende Luft bewirkt eine intensive, unregelmäßige Bewegung der Schüttung, wodurch die an dem Granulat angelagerten Partikel abgetrennt werden und in der Waschflüssigkeit absinken. Nach einer vorgegeben Zeit wird das Ventil 19 geöffnet, die Waschflüssigkeit und die abgetrennte Partikel fließen in das Absetzbecken 16 ab. Nachdem die Flüssigkeit abgeflossen ist, steht die jeweils abgereinigte Schüttung 1' wieder für die Gasreinigung zur Verfügung.

Der beschriebene Vorgang wird abwechselnd bei allen Teilschüttungen 1' durchgeführt, so daß der Gesamtfilterdifferenzdruck konstant gehalten wird. Die im Absetzbecken gesammelte Flüssigkeit und der abgereinigte Staub werden weitgehend getrennt, da sich die Partikeln durch die Schwerkraft unten in der Flüssigkeit absetzen, so daß die Flüssigkeit für eine erneute Abreinigung wiederverwendet werden kann. Die Partikel werden als Schlamm gesondert abgezogen und einer separaten Behandlung zugeführt.

### Bezugszeichenliste:

- 1: Schüttschichtfilter
- 1': Einzelschichten
- 2: Gehäuse
- 3: Trennwände
- 4: Kammern
- 5: Siebböden
- 6: Gassammelraum
- 7: Auffangwannen
- 8: Zuleitung
- 9: Waschflüssigkeit
- 10: Überlauf
- 11: Verteilerdüsen
- 12: Abluftöffnungen
- 13: Zuluft
- 14: gereinigte Abluft
- 15: Abflußleitung
- 16: Absetzbecken
- 17: Rückleitung
- 18: Kanäle
- 19: Abschlußventil

## Patentansprüche

1. Verfahren zur Naßabreinigung von mit unlöslichen Partikeln beladenen Schüttschichtfiltern aus mehreren schichten schüttbaren Filtermateriales auf siebartigen Böden, welche von oben nach unten von dem zu reinigenden Abgasstrom durchsetzt werden, bei welchem die Waschflüssigkeit in Kontakt mit dem Filtermaterial gebracht wird, die Schichten vollständig mit der Waschflüssigkeit geflutet werden und gleichzeitig mit der Flutung am Boden der Schichten in die Schüttung ein Gas wie z. B. Luft eingeblasen wird, dadurch gekennzeichnet,
daß von den Schichten jeweils nacheinander nur eine geflutet und durch die Lufteinblasung abgereinigt wird und die übrigen weiterhin vom zu reinigenden Gasstrom durchströmt werden.

2. Verfahren nach Anspruch 1, dadurch gekennzeichnet,
daß danach oder gleichzeitig die dadurch mit der Waschflüssigkeit von dem Schüttgut der Filterschichten abgetrennten unlöslichen Partikel am Boden der Schüttung gemeinsam mit der Waschflüssigkeit abgezogen werden.

3. Vorrichtung zur Durchführung eines Verfahrens nach Anspruch 1 oder 2 mit mehreren hintereinandergeschalteten Schichten des Schüttgutes in einem Gehäuse mit den folgenden Merkmalen:
a) das Gehäuse (2) ist der Zahl der Schichten (1') entsprechend in nebeneinanderliegende Kammern (4) aufgeteilt, wobei die Schichten (1') von oben angeströmt werden,
b) jede Kammer (4) besitzt zwei Seitenwände (3) geringerer Höhe als die Gehäusehöhe,
c) zwischen jeweils zwei Seitenwänden (3) einer Kammer (4) sind siebartige Böden (5) vorhanden, auf denen das von oben nach unten von dem zu reinigenden Gas durchströmte Schüttgut liegt und unter denen sich der Gassammelraum (6) für das Gas befindet,
d) oberhalb des Schüttgutes jeder Schicht (1') ist eine Zuleitung (8) für die Waschflüssigkeit (9) angebracht,
e) der Boden des Gehäuses (2) ist als Auffangwanne für die Waschflüssigkeit (9) ausgebildet,
gekennzeichnet durch die weiteren Merkmale:
f) die einzelnen Kammern (4) sind mittels der aus den Zuleitungen (8) eingebrachten Waschflüssigkeit (9) einzeln für sich bis zu einem Überlauf (10) flutbar, der oberhalb der Schichten (1') im Gehäuse (2) angeordnet ist
g) unterhalb der siebartigen Böden (5) sind in bzw. unter jeder Kammer (1') im Gassammelraum (6) je eine Verteilerdüse (11) angebracht, mittels welcher Luft oder ein anderes Gas eingeblasen wird, welches die jeweilige Schicht (1') des Schüttgutes durchsetzt,
h) ebenfalls unterhalb der Böden (5) im Bereich des Gassammelraumes (6) befindet sich in der Wand der Gehäuse (4) jeweils für jede Schicht (1') eine Öffnung (12) für die Ableitung des gereinigten Gases in die Abluft (14).

4. Vorrichtung nach Anspruch 3, gekennzeichnet durch das weitere Merkmal:
a) unterhalb der Auffangwanne (7) ist unter jeder Kammer (1') je eine absperrbare Abflußleitung (15) für die Waschflüssigkeit angeschlossen, die zu einem gemeinsamen Absetzbecken (16) führt.

## Claims

1. Method for the wet-cleaning of bulk-layer filters, which are charged with insoluble particles, from a plurality of layers of pourable filter material on sieve-like bases, which are travered from top to bottom by the stream of waste gas to be cleaned, wherein the washing fluid is brought into contact with the filter material, the layers are completely flooded with the washing fluid, and a gas, such as air, for example, is injected into the bulk filling simultaneously with the flooding at the base of the layers, characterised in that only one of the layers at a time is ever flooded one after the other and cleaned by the injection of air, and the other layers continue to be traversed by the gas stream to be cleaned.

2. Method according to claim 1, characterised in that the insoluble particles, separated thereby from the bulk material of the filter layers with the washing fluid, are thereafter or simultaneously discharged together with the washing fluid at the base of the bulk filling.

3. Apparatus for accomplishing a method according to claim 1 or 2, having a plurality of series-connected layers of the bulk material in a housing, having the following features:
a) the housing (2) is divided into chambers (4), which lie adjacent one another, so as to correspond to the number of the layers (1'), the flow being directed towards the layers (1') from above,
b) each chamber (4) has two lateral walls (3) which are not as high as the housing,
c) sieve-like bases (5) are provided between every two lateral walls (3) of a chamber (4), on which bases the bulk material, which is traversed from top to bottom by the gas to be cleaned, and beneath which bases the gas collecting chamber (6) for the gas is situated,
d) a supply line (8) for the washing fluid (9) is mounted above the bulk material of each layer (1'), and
e) the base of the housing (2) is configured as a collecting trough for the washing fluid (9),
characterised by the additional features:
f) the individual chambers (4) are individually floodable per se by means of the washing fluid (9), which is introduced from the supply lines (8), as far as an overflow (10), which is disposed above the layers (1') in the housing (2),
g) a distributor nozzle (11) is disposed beneath each of the sieve-like bases (5) in or below each chamber (4) in the gas collecting chamber (6), by means of which nozzle air or a different gas, which traverses the respective layer (1') of the bulk material, is injected, and
h) an opening (12) for the discharge of the cleaned gas into the outgoing air (14) is also situated beneath the bases (5) in the region of the gas collecting chamber (6) in the wall of the housing (2).

4. Apparatus according to claim 3, characterised by the additional feature:
a) a closable discharge conduit (15) for discharging the washing fluid is fitted beneath the collecting trough (7) below each chamber (4) and leads to a common settling tank (16).

## Revendications

1. Procédé d'épuration par voie humide de filtres à lit tassé chargés de particules insolubles, composés de plusieurs couches de matériau filtrant entassables sur fond de criblage qui sont traversés de haut en bas par les débits de gaz d'échappement à épurer, où le fluide de lavage est mis en contact avec le matériau filtrant tout en insufflant dans le lit tassé un gaz comme p. ex. de l'air en même temps que le fond des couches est noyé, caractérisé en ce que
les couches sont individuellement et successivement noyées et épurées par l'air insufflé, les autres étant toujours traversées par le débit de gaz à épurer.

2. Procédé selon la revendication 1, caractérisé en ce qu'ensuite ou en même temps, les particules insolubles ainsi séparées des matières en vrac des couches filtrantes par le fluide de lavage sont soutirées du fond du lit tassé avec le fluide de lavage.

3. Equipement pour réaliser un procédé selon la revendication 1 ou 2, comprenant plusieurs couches installées en série des matières en vrac, dans un boîtier aux caractéristiques suivantes :
a) le boîtier (2) est divisé en chambres juxtaposées (4) en fonction du nombre de couches (1'), le débit affluant aux couches en passant de haut en bas,
b) chaque chambre (4) possède deux parois latérales (3) d'une hauteur inférieure à celle du boîtier,
c) entre deux parois latérales (3) de chaque chambre (4) il y a des fonds de criblage (5) sur lesquels se trouvent les matières en vrac traversées de haut en bas par le gaz à épurer et sous lesquels se trouve le réservoir (6) du gaz,
d) au-dessus des matières en vrac de chaque couche (1') se trouve une conduite d'alimentation (8) du fluide de lavage (9),
e) le fond du boîtier (2) est conçu comme récupérateur du fluide de lavage (9),caractérisé en outre en ce que :
f) les différentes chambres (4) peuvent être noyées individuellement par le fluide de lavage (9) introduit à travers les conduites d'alimentation (8), jusqu'à un déversoir qui est disposé au-dessus des couches (1') dans le boîtier (2),
g) au-dessous des fonds de criblage (5), dans ou resp. sous chaque chambre (1') dans le réservoir de gaz (6), il y a une tuyère de distribution (11) par laquelle l'air ou un autre gaz est insufflé qui traverse la couche (1') respective des matières en vrac,
h) de même, au-dessous des fonds (5) au droit du réservoir de gaz (6), dans la paroi des boîtiers (4), pour chaque couche (1') il y a une ouverture (12) pour l'évacuation du gaz épuré vers l'air d'échappement (14).

4. Equipement selon la revendication 3, caractérisé en outre en ce que :
a) sous chaque chambre (1'), au-dessous du récupérateur (7), un conduit de décharge isolable (15) est connecté pour conduire le fluide de lavage vers un bassin de décantation (16) commun.
